# EUROPEAN PATENT APPLICATION

(11) **EP 3 072 397 A1**
(43) Date of publication of application: **28.09.2016**
(21) Application number: 14864404.0
(22) Date of filing: 12.11.2014
(51) Int. Cl.: A23D 9/02, A23D 9/007, A23L 5/00

(54) **POWDERED OIL OR FAT COMPOSITION AND PROCESS FOR PRODUCING SAME**

(30) Priority: 19.11.2013 JP 2013238788
(71) Applicant: The Nisshin Oillio Group, Ltd., Chuo-ku Tokyo 104-8285 (JP)
(72) Inventor: KUWAHARA Masami, Yokosuka-shi Kanagawa 239-0832 (JP); SUYAMA Daisuke, Yokosuka-shi Kanagawa 239-0832 (JP); TAKAGI Tetsuo, Yokosuka-shi Kanagawa 239-0832 (JP)
(74) Representative: Bawden, Peter Charles
(86) International application number: PCT/JP2014/079968
(87) International publication number: WO 2015/076164

(57) **Abstract**

Provided is a powdered oil or fat composition comprising as essential components: an edible oil or fat; an indigestible dextrin; and a casein salt. It is preferable that the powdered oil or fat composition comprises 5 to 84.9% by mass of the edible oil or fat, 5 to 85% by mass of the indigestible dextrin, 0.1 to 10% by mass of the casein salt, and 0.1 to 2% by mass of the edible emulsifier. This makes it possible to provide a powdered oil or fat composition from which no oil or fat bleeds out and which is excellent in flavor, texture, flowability, and water-dispersibility, and a method for producing the powdered oil or fat composition.

## Description

### Technical Field

The present invention relates to a powdered oil or fat composition which comprises an indigestible dextrin and a casein salt and which is excellent in flavor, texture, flowability, and water-dispersibility and has good workability and usability, and also relates to a method for producing the powdered oil or fat composition and a food or beverage comprising the powdered oil or fat composition. In addition, the present invention relates to a base material for preparation of a powdered oil or fat comprising an indigestible dextrin and a casein salt as active ingredients, and a method for inhibiting bleeding of an oil or fat from a powdered oil or fat composition, the method comprising using the base material for preparation of a powdered oil or fat.

### Background Art

In producing a processed oil or fat food, there are not only a demand for the use of an oil or fat itself but also a demand for the use of a powdered oil or fat from the viewpoints of handleability, of workability, and of easily increasing the variety of morphologies of various foods. In this respect, many powder preparation techniques related to oils or fats and mainly focused on triglycerides have been disclosed from the past.

Known base materials for preparation of a powdered oil or fat include proteins such as casein salts, gelatin, and skim milk powder, carbohydrates such as dextrin, lactose, and reduced maltose, and fibers such as microcrystalline cellulose (Patent Document 1).

The above-described various base materials for preparation of a powder have been considered, but, actually, the workability and the usability are poor in some cases, because of the following reasons or the like. Specifically, when the flowability of a powdered oil or fat is increased, the water-dispersibility deteriorates, or when the oil or fat content is increased, the oil or fat bleeds out of the obtained powdered oil or fat. In this respect, considering the workability and usability as a food ingredient, there has been a demand for development of an advanced technique by which the oil or fat component is not simply contained in a base material for preparation of a powder as in the conventional cases, but trapped in a base material for preparation of a powder.

To make a powdered oil or fat flowable, it is necessary to reinforce a coating film with a protein for prevention of bleeding of the oil or fat. However, the water-dispersibility deteriorates in such a case. On the other hand, to increase the water-dispersibility, it is necessary to reduce the amount of the protein as much as possible. However, a large amount of the oil or fat bleeds in such a case. In addition, when the affinity of the oil or fat for water is increased with a protein, moisture absorption easily occurs during storage, which causes blocking and deteriorates the water-dispersibility, although the amount of the oil or fat bled decreases. As described above, the water-dispersibility of a powdered oil or fat is in a trade-off relationship with the flowability of the powdered oil or fat and the bleeding of the oil or fat.

A technique is known by which flowability and water-dispersibility are provided to a powdered oil or fat. In this technique, a highly branched cyclic dextrin is used for a powdered oil or fat obtained by a spray drying method instead of dextrins conventionally used as base materials for preparation of a powder (Patent Document 2). Moreover, a technique is known by which a powdered oil or fat comprising a highly branched cyclic dextrin and being excellent in oxidation stability and flavor retention in addition to the above-described characteristics is obtained (Patent Document 3).

On the other hand, indigestible dextrins are known as dextrins having a branched structure different from that of these branched dextrins. In a living organism, dextrins are degraded to maltose with an amylase, and eventually degraded to glucose. However, some components in the dextrins are resistant to the degradation with an amylase. The indigestible dextrins are obtained by purifying such components in the dextrins.

The indigestible dextrins are a class of non-digestible water-soluble dietary fibers, and have been used by being blended in a wide variety of foods and beverages. It is known that such an indigestible dextrin is used as a binder in producing granules from a kale dry powder (Patent Document 4). However, the indigestible dextrin is not used as a binder for a powdered oil or fat, but merely used for preparing a plant (kale) powder. Hence, Patent Document 4 is irrelevant to the present invention.

In the present invention, it has been found that a powdered oil or fat containing an indigestible dextrin and a casein salt is excellent in flowability, water-dispersibility, workability, and usability. There has been no report on this point.

### Citation List

### Patent Literatures

| | |
|---|---|
| Patent Literature 1: | JP 50-110403A |
| Patent Literature 2: | JP 2003-49190A |
| Patent Literature 3: | JP 3865294B |
| Patent Literature 4: | JP 2003-250479A |

### Summary of Invention

An object of the present invention is to provide a powdered oil or fat composition wherein bleeding of oil or fat is reduced, and which is excellent in flavor, texture, flowability, and water-dispersibility, and a method for producing the powdered oil or fat composition.

In this respect, the present inventors have conducted intensive study on a method for producing a powdered oil or fat composition, and consequently found that this object can be achieved by using an indigestible dextrin and a casein salt in combination. As a result, it has been found that a powdered oil or fat composition can be obtained which retains a good water-dispersibility, a good flavor, and a good texture, and also which has flowability, is reduced in oil or fat bleeding, and has good workability and usability. This finding has led to the completion of the present invention.

Specifically, according to an aspect of the present invention, it is possible to provide a powdered oil or fat composition comprising as essential components: an edible oil or fat; an indigestible dextrin; and a casein salt. In this case, the powdered oil or fat composition preferably further comprises an edible emulsifier as an essential component.

According to a preferred mode of the present invention, it is possible to provide the above-described powdered oil or fat composition, wherein the content of the edible oil or fat is 5 to 84.9% by mass, the content of the indigestible dextrin is 5 to 85% by mass, and the content of the casein salt is 0.1 to 10% by mass. In this case, the powdered oil or fat composition preferably further comprises 0.1 to 2% by mass of an edible emulsifier.

According to another preferred mode of the present invention, it is possible to provide a production method by which the above-described powdered oil or fat composition can be efficiently produced. This method for producing the above-described powdered oil or fat composition comprises: mixing a liquid oil phase containing an edible oil or fat with a water phase containing an indigestible dextrin and a casein salt to obtain an oil-in-water emulsion; and then spray-drying the oil-in-water emulsion to obtain a powder. In this production method, the liquid oil phase and the water phase are mixed with each other preferably in the presence of an edible emulsifier.

According to a preferred mode of the present invention, it is possible to provide a food or beverage produced by using the above-described powdered oil or fat composition.

According to another preferred mode of the present invention, it is possible to provide a method for producing a food or beverage comprising using the above-described powdered oil or fat composition as an ingredient.

In addition, according to another aspect of the present invention, it is possible to provide a base material for preparation of a powdered oil or fat comprising, as active ingredients, an indigestible dextrin and a casein salt, and preferably consisting of an indigestible dextrin and a casein salt.

According to a preferred mode of the present invention, it is possible to provide a method for controlling bleeding of an oil or fat from a powdered oil or fat composition, the method comprising mixing the above-described base material for preparation of a powdered oil or fat with an oil- or fat-containing ingredient, followed by drying.

The present invention makes it possible to provide a powdered oil or fat composition which is excellent in water-dispersibility and the like and also which is excellent in workability and usability because the amount of oil or fat bled out from the powdered oil or fat composition is smaller than those from conventional powdered oil or fat compositions, and a method for producing the powdered oil or fat composition. It is also possible to provide a base material for preparation of a powder, the base material comprising an indigestible dextrin and a casein salt as active ingredients, and a method for controlling bleeding of an oil or fat from a powdered oil or fat composition, the method comprising using the base material for preparation of a powder. Since there has been no powdered oil or fat having such excellent workability and usability so far, a new demand can be met.

### Description of Embodiments

Hereinafter, a powdered oil or fat composition of the present invention is described one by one.

The content of oil or fat in the powdered oil or fat composition of the present invention is not particularly limited, and, for example, the content of oil or fat is preferably 5 to 84.9% by mass. Moreover, the oil or fat content in the powdered oil or fat composition of the present invention is preferably 10 to 80% by mass, more preferably 15 to 80% by mass, and further preferably 20 to 80% by mass. Especially, the content of the oil or fat is preferably 50% by mass or higher, and further preferably 60% by mass or higher or 65% by mass or higher.

As the edible oil or fat used in the present invention, any oil or fat ingredient may be used. Specifically, it is possible to use one or more selected from soybean oil, rapeseed oil, corn oil, cottonseed oil, safflower oil, olive oil, rice bran oil, palm oil, palm oil fractions, hydrogenated oils obtained from these oils, transesterified oils obtained from any of the above-described oils, and the like. It is particularly preferably to use an oil or fat containing medium-chain fatty acids having 6 to 12 carbon atoms. This edible oil or fat may be a triacylglycerol whose constituent fatty acids are only medium-chain fatty acids having 6 to 12 carbon atoms, or a mixed-acid triacylglycerol whose constituent fatty acids are medium-chain fatty acids having 6 to 12 carbon atoms and other fatty acids. Here, the position at which each of the medium-chain fatty acids is bound to the glycerin is not particularly limited. In addition, when the edible oil or fat is a mixed-acid triacylglycerol, the mixed-acid triacylglycerol may contain fatty acids other than fatty acids having 6 to 12 carbon atoms as some of the constituent fatty acids, and, for example, may contain long-chain fatty acids. Here, the medium-chain fatty acids having 6 to 12 carbon atoms are preferably linear saturated fatty acids.

The indigestible dextrin used in the present invention is not particularly limited, as long as the indigestible dextrin is obtained by separating and purifying an indigestible portion obtained by performing a heat treatment and an enzyme treatment on starch. For example, the indigestible dextrin can be obtained by subjecting pyrodextrin, which is obtained by a heat treatment on starch under an acidic condition, to a hydrolysis treatment using α-amylase, and further performing a purification treatment such as a glucoamylase treatment, an ion-exchange resin chromatography treatment, or the like. In addition, the indigestible dextrin of the present invention includes reduced indigestible dextrin obtained by a hydrogenation treatment. These indigestible dextrins are commercially available in the forms of powder, fine granule, granule, and the like, and the indigestible dextrins can be used in any of these forms. The content of the indigestible dextrin in the powdered oil or fat composition of the present invention is preferably 5 to 85% by mass, more preferably 10 to 80% by mass, and further preferably 15 to 70% by mass. In particular, the content of the indigestible dextrin is preferably 40% by mass or less, and further preferably 35% by mass or less or 30% by mass or less.

As the casein salt used in the present invention, commercially available casein salts can be used, and examples thereof include sodium caseinate, calcium caseinate, and the like. The content of the casein salt in the powdered oil or fat composition of the present invention is preferably 0.1 to 10% by mass, more preferably 1 to 7.5% by mass, and further preferably 2 to 5% by mass.

The edible emulsifier of the present invention is not particularly limited, as long as the edible emulsifier is generally used. For example, it is possible to use a glycerin fatty acid ester, an organic acid monoglyceride, a polyglycerin fatty acid ester, a propylene glycol fatty acid ester, a polyglycerin condensed ricinoleate, a sorbitan fatty acid ester, a sucrose fatty acid ester, lecithins, enzymatically decomposed lecithins, or the like. The content of the edible emulsifier in the powdered oil or fat composition of the present invention is preferably 0.1 to 2% by mass, more preferably 0.2 to 1.5% by mass, and further preferably 0.3 to 1% by mass.

Note that the use of the indigestible dextrin and casein salt used in the present invention makes it possible to obtain a powdered oil or fat composition which is excellent in taste, texture, and water-dispersibility and which is reduced in oil or fat bleeding and has good workability and usability as described above. Accordingly, the present invention also relates to a base material for preparation of a powdered oil or fat, the base material comprising an indigestible dextrin and a casein salt as active ingredients, and a method for controlling bleeding of an oil or fat from a powdered oil or fat composition, the method comprising mixing the base material with an oil- or fat-containing ingredient, followed by drying. The blending of the indigestible dextrin and the casein salt of the present invention in a powdered oil or fat composition as shown below makes it possible to obtain an effect of controlling the bleeding of oil or fat from the powdered oil or fat composition.

In addition, the powdered oil or fat composition of the present invention may essentially consist of an edible oil or fat, an indigestible dextrin, a casein salt, and an edible emulsifier, or may contain an excipient such as dextrin or starch, other quality modifiers, and the like, flavors, coloring matters, seasonings, and the like in addition to the above-described components, as long as any effect of the present invention is not impaired.

The particle diameter of the powdered oil or fat composition of the present invention may be any, and can be set to a size which is the same as that of a powder used for foods. The average particle diameter measured by a laser diffraction/scattering method is preferably 10 to 100 µm.

A method for preparing a powdered oil or fat composition is not particularly limited, and ordinary methods can be employed.

Examples of the above-described methods include a spraying method, a crushing method, a coating method, and the like, and the spraying method is preferable.

In particular, preferred is a method for producing a powdered oil or fat composition comprising the steps of: mixing an edible emulsifier with a liquid oil phase containing an edible oil or fat and a water phase containing an indigestible dextrin and a casein salt to obtain an oil-in-water emulsion; and then spray-drying the oil-in-water emulsion to obtain a powder. Here, the liquid oil phase and the water phase are preferably mixed with each other in a heated state. The temperature is preferably, for example, 50 to 90°C, and particularly preferably 50 to 70°C. In addition, in the present invention, the edible emulsifier can be added to one of or both of the oil phase and the water phase, and it is preferable to add the edible emulsifier to the liquid oil phase in advance.

The mixing of the liquid oil phase and the water phase is preferably carried out with a homomixer, and it is preferable to prepare an oil-in-water emulsion and then homogenize the emulsion with a homogenizer. Here, it is preferable to homogenize the emulsion with a homogenizer under a pressure of 50 kg/cm² to 300 kg/cm².

The amount of water used to form the water phase is preferably 90 to 1000 parts by mass, where the amount of oil used is taken as 100 parts by mass.

The food or beverage of the present invention is not particularly limited, and may be a solid food such as a dried food, a liquid food such as a supplement, a refreshing a beverage, a tasty beverage, or the like containing the powdered oil or fat composition.

Examples of the solid food include paste products, soybean-processed foods, mousses, jellies, yogurts, cold desserts, candies, chocolates, chewing gums, crackers, biscuits, cookies, cakes, breads, and the like. Meanwhile, examples of the liquid foods include teas such as green tea, oolong tea, black tea, and herbal teas, concentrated fruit juices, juices from concentrate, straight juices, fruit mix juices, fruit juices with pulp, fruit juice-containing beverages, fruit and vegetable mix juices, vegetable juices, carbonated beverages, refreshing beverages, dairy beverages, and soy milks, and further includes pet foods, animal feeds, and the like.

### [Examples]

Next, the present invention is described in further detail based on Example and Comparative Example; however, the present invention is not limited to Example or Comparative Example at all.

In the following description, "%" means % by mass, unless otherwise noted.

### <Production of Powdered Oil or Fat Compositions>

In Example and Comparative Example, powdered oil or fat compositions were produced according to the formulae shown in Table 1. Each oil phase was prepared by adjusting the temperature of 75 g of oil or fat to 60°C, and then adding an edible emulsifier to the oil or fat. Each water phase was prepared by adjusting the temperature of 100 g of water to 60°C, and adding an indigestible dextrin or a dextrin and sodium caseinate according to the corresponding formula. With the oil phase kept at 60°C and the water phase kept at 60°C, all the oil phase was added to the water phase under stirring with a homomixer. Thus, an oil-in-water emulsion was prepared. Then, the emulsion was homogenized with a homogenizer under a pressure of 150 kg/cm2. After the homogenization, a powder was prepared by spray drying to obtain a powdered oil or fat composition (having an average particle diameter measured by a laser diffraction/scattering method of 42.0 µm).

### <Ingredients>

As the edible oil or fat, MCT (manufactured by The Nisshin OilliO Group, Ltd. under the trade name of MCT-C10R) was used in which the fatty acids constituting the triacylglycerol were n-octanoic acid (having 8 carbon atoms) and n-decanoic acid (having 10 carbon atoms), with the ratio of the fatty acid constituting the triglyceride is as follows: n-octanoic acid:n-decanoic acid = 30:70. Commercially available products were used as the indigestible dextrin, the dextrin, the sodium caseinate, and the edible emulsifier, which was a glycerin fatty acid ester type edible emulsifier.

**Table 1 Formulae of powdered oil or fat compositions**

| | Example | Comp. Ex. |
|---|---|---|
| Ingredients blended | (g) | (g) |
| Edible oil or fat | 75.0 | 75.0 |
| Indigestible dextrin | 20.5 | - |
| Dextrin | - | 20.5 |
| Sodium caseinate | 4.0 | 4.0 |
| Edible emulsifier | 0.5 | 0.5 |
| Ingredient total | 100.0 | 100.0 |

### <Methods for Evaluating Powdered Oil or Fat Compositions>

The thus obtained powdered oil or fat compositions were evaluated as follows. Specifically, the flavor and texture, the flowability, and the water-dispersibility were evaluated based on the characteristics of the powdered oil or fat compositions. Meanwhile, the workability and the usability were evaluated based on the ratio of the oil or fat bleeding determined by two methods in which a load or vibration and friction were applied.

### (1) Evaluation of Characteristics of Powdered Oil or Fat Compositions

The characteristics of the powdered oil or fat compositions, including the flavor and texture, the flowability, and the water-dispersibility were evaluated, and the results are shown in Table 2.

The flavor and texture of each powdered oil or fat composition was evaluated as follows. Specifically, the powdered oil or fat composition was added to water in an amount 10 times that of the powdered oil or fat composition, and the mixture was stirred. Then, the aqueous solution was tasted by 10 panelists, and subjected to sensory evaluation in terms of flavor and texture. Then, the powdered oil or fat composition was rated by using the following criteria.
A: Eight or more of the 10 panelists evaluated the aqueous solution to be good.
B: Five to seven of the 10 panelists evaluated the aqueous solution to be good.
C: Four or less of the 10 panelists evaluated the aqueous solution to be good.

The flowability of each powdered oil or fat composition was evaluated as follows. Specifically, approximately 5 g of the powdered oil or fat composition was placed and sealed in a 50 ml transparent plastic tube having a cap. Then, the tube was overturned, and the dispersed state was visually observed. The powdered oil or fat composition was rated by using the following criteria.
A: The powder moved smoothly, and the flowability was good.
B: The powder did not move smoothly, and the flowability was slightly poor.
C: The moving powder formed blocks or agglomerates, and the flowability was poor.

The water-dispersibility of each powdered oil or fat composition was evaluated as follows. Specifically, the powdered oil or fat composition was added to water in an amount 10 times that of the powdered oil or fat composition, and the mixture was stirred. Then, the dispersed state was visually observed, and the powdered oil or fat composition was rated by using the following criteria.
A: Even after stirring, the powdered oil or fat composition was uniformly dispersed.
B: When stirred, the powdered oil or fat composition was not dispersed rapidly.
C: Some blocks were left after stirring.

**Table 2 Evaluation results of characteristics of powdered oil or fat compositions**

| | Example | Comp. Ex. |
|---|---|---|
| Flavor | A | B |
| Texture | A | B |
| Flowability | A | B |
| Water-dispersibility | A | B |

### (2) Results of Load-Induced Bleeding of Oil or Fat from Powdered Oil or Fat Compositions

Approximately 1 g of the powdered oil or fat composition was placed between two sheets of filter paper with a diameter of 90 mm in an area with a diameter of 30 mm. Note that since it was difficult to exactly weigh 1 g of the powdered oil or fat composition, the oil or fat bleeding ratio was corrected by using the weight of the powdered oil or fat composition used. To these sheets, a load of 21.5 kg was applied from the above for 1.5 hours, and the weight of oil bled to the filter paper was determined based on the weight. The same operation was conducted in independent four experiments. Table 3 shows the average value.

**Table 3 Results of Load-Induced Bleeding of Oil or Fat from Powdered Oil or Fat Compositions**

| | Example | Comp. Ex. |
|---|---|---|
| Weight of filter paper after test [g] | 1.52293 | 1.53730 |
| Weight of filter paper before test [g] | 1.51078 | 1.52163 |
| Increase in weight of filter paper [mg] | 12.15 | 15.67 |
| Weight of powdered oil or fat composition used [g] | 1.01685 | 0.99950 |
| Oil or fat bleeding ratio [%] | 1.65 | 2.09 |
| Relative oil bleeding ratio with oil or fat bleeding ratio of Example taken as 100 [%] | 100.0 | 126.8 |

When a weight load was applied to the powdered oil or fat compositions, the oil or fat bleeding ratio of Comparative Example was 126.8%, where the oil or fat bleeding ratio of Example was taken as 100%. This indicates that the bleeding of the oil or fat from the powdered oil or fat composition was significantly inhibited in the case where the base material for preparation of a powdered oil or fat containing the indigestible dextrin was used in comparison with the case where the base material for preparation of a powdered oil or fat containing the dextrin was used. Accordingly, the powdered oil or fat composition of Example was better in workability and usability than that of Comparative Example.

### (3) Results of Vibration and Friction-Induced Bleeding of Oil or Fat from Powdered Oil or Fat Compositions

Filter paper with a diameter of 90 mm was placed on an inner wall of a 15 ml transparent plastic centrifuge tube having a cap, and approximately 1 g of the powdered oil or fat composition was introduced into the tube. Then, vibration was applied to the tube at 250 rpm for 2.5 hours. Note that since it was difficult to exactly weigh 1 g of the powdered oil or fat composition, the oil or fat bleeding ratio was corrected by using the weight of the powdered oil or fat composition used. The amount of oil bled out to the filter paper was determined based on the weight. The same operation was conducted in independent five experiments. Table 4 shows the average value.

**Table 4 Results of vibration and friction-induced bleeding of oil or fat from powdered oil or fat compositions**

| | Example | Comp. Ex. |
|---|---|---|
| Weight of filter paper after test [g] | 0.76470 | 0.77385 |
| Weight of filter paper before test [g] | 0.76177 | 0.76999 |
| Increase in weight of filter paper [mg] | 2.935 | 3.86 |
| Weight of powdered oil or fat composition used [g] | 1.00320 | 1.00678 |
| Oil or fat bleeding ratio [%] | 0.39 | 0.52 |
| Relative oil bleeding ratio with oil or fat bleeding ratio of Example taken as 100 [%] | 100.0 | 132.0 |

When the powdered oil or fat compositions were loaded with the vibration and friction, the oil or fat bleeding ratio of Comparative Example was 132.0%, where the oil or fat bleeding ratio of Example was taken as 100%. This indicates that the bleeding of oil or fat from the powdered oil or fat composition was significantly inhibited in the case where the base material for preparation of a powdered oil or fat containing the indigestible dextrin was used in comparison with the case where the base material for preparation of a powdered oil or fat containing the dextrin was used. Accordingly, the powdered oil or fat composition of Example had better workability and usability than that of Comparative Example.

## Claims

1. A powdered oil or fat composition, comprising as essential components:
an edible oil or fat;
an indigestible dextrin; and
a casein salt.

2. The powdered oil or fat composition according to claim 1, further comprising an edible emulsifier as an essential component.

3. The powdered oil or fat composition according to claim 2, which comprises 5 to 84.9% by mass of the edible oil or fat, 5 to 85% by mass of the indigestible dextrin, 0.1 to 10% by mass of casein salt, and 0.1 to 2% by mass of the edible emulsifier.

4. A method for producing the powdered oil or fat composition according to claim 1, which comprises the steps of
mixing a liquid oil phase containing an edible oil or fat with a water phase containing an indigestible dextrin and a casein salt to obtain an oil-in-water emulsion; and then
spray-drying the oil-in-water emulsion to obtain a powder.

5. A method for producing the powdered oil or fat composition according to claim 2 or 3, which comprises the steps of
mixing a liquid oil phase containing an edible oil or fat with a water phase containing an indigestible dextrin and a casein salt in the presence of an edible emulsifier to obtain an oil-in-water emulsion; and then
spray-drying the oil-in-water emulsion to obtain a powder.

6. The production method according to claim 5, wherein the edible emulsifier is added to the liquid oil phase in advance.

7. The production method according to claim 6, wherein the liquid oil phase and the water phase are mixed with each other in a heated state.

8. A food or beverage produced by using the powdered oil or fat composition according to any one of claims 1 to 3.

9. A method for producing a food or beverage, comprising: using the powdered oil or fat composition according to any one of claims 1 to 3 as an ingredient.

10. A base material for preparation of a powdered oil or fat, comprising as active ingredients:
an indigestible dextrin; and a casein salt.

11. A method for controlling bleeding of an oil or fat from a powdered oil or fat composition, which comprises the steps of mixing the base material for preparation of a powdered oil or fat according to claim 10 with an oil- or fat-containing ingredient, followed by drying.
